# EUROPEAN PATENT APPLICATION

(11) **EP 4 283 511 A1**
(43) Date of publication of application: **29.11.2023**
(21) Application number: 22742210.2
(22) Date of filing: 20.01.2022
(51) Int. Cl.: G06F 30/20

(54) **INFORMATION PROCESSING METHOD AND DEVICE, SERVER AND USER EQUIPMENT**

(30) Priority: 25.01.2021 CN 202110099097
(71) Applicant: ALIBABA GROUP HOLDING LIMITED, George Town, Grand Cayman (KY)
(72) Inventor: ZOU, Chenjun, Hangzhou, Zhejiang 311121 (CN)
(74) Representative: Finnegan Europe LLP
(86) International application number: PCT/CN2022/072913
(87) International publication number: WO 2022/156731

(57) **Abstract**

Embodiments of the present application provide an information processing method and apparatus, a server, and a user device. The method comprises: detecting a parameter optimization request initiated by a target user and determining a parameter sampling algorithm matching the target user; invoking, in response to a sample acquisition request initiated by the target user, the parameter sampling algorithm to generate a test sample; determining a simulation result for the test sample based on a preset objective function; and outputting the simulation result for the test sample for the target user. Embodiments of the present application improve the efficiency of parameter optimization.

## Description

The present application claims priority to Chinese Patent Application No. 202110099097.6, titled "INFORMATION PROCESSING METHOD AND APPARATUS, SERVER, AND USER DEVICE" and filed on January 25, 2021, the entire content of which is incorporated herein by reference in its entirety.

### Technical Field

The present application relates to the technical field of electronic devices, and in particular to an information processing method and apparatus, a server, and a user device.

### Background

A black box algorithm is an algorithmic model established to solve complex problems that cannot be modeled using a clear mathematical formulation. The mathematical model of a black box algorithm is usually unknown, and the corresponding input data is input to an objective function of the black box algorithm so as to calculate and obtain output data corresponding to that input data. In the actual calculation process, the specific objective function of a black box algorithm is unknown. Due to the type of service and the high selectivity of a black box algorithm, the black box algorithm can be applied to many fields such as e-commerce, finance, electricity, and so on.

In the existing technology, developers can implement black box optimization based on the AutoML (Automated machine learning) framework. The main process of black box optimization is to continuously generate, for parameters to be optimized, new samples by means of a parameter sampling algorithm, and then use an objective function of the black box to evaluate the effect of the use of the samples, so as to obtain the simulation results for the samples, and after that, continuously use the parameter sampling algorithm to generate new samples and perform simulation evaluation to generate a target sample that is close to the simulation result and satisfies a predetermined condition as soon as possible. The target sample and the simulation result corresponding to the target sample are the optimization result of this black box optimization.

However, the existing black box optimization, after developed by developers, mainly performs the black box optimization process locally, resulting in low efficiency of black box optimization.

### Summary of the Invention

In view of this, embodiments of the present application provide an information processing method and apparatus, a server, and a user device to solve the technical problem of low efficiency of black box optimization due to local execution of the black box optimization process in the prior art.

In a first aspect, embodiments of the present application provide an information processing method, comprising:
detecting a parameter optimization request initiated by a target user and determining a parameter sampling algorithm matching the target user;
invoking, in response to a sample acquisition request initiated by the target user, the parameter sampling algorithm to generate a test sample;
determining a simulation result for the test sample based on a preset objective function; and
outputting the simulation result for the test sample for the target user.

In a second aspect, embodiments of the present application provide an information processing method, comprising:
detecting a parameter optimization request initiated by a target user for a parameter sampling algorithm;
sending the parameter optimization request provided by the target user to a service end for the service end to determine a parameter sampling algorithm matching the target user;
sending a sample acquisition request initiated by the target user to the service end for the service end to invoke, in response to the sample acquisition request, the parameter sampling algorithm to generate a test sample;
determining a simulation result for the test sample based on a preset objective function; and
outputting the simulation result for the test sample for the target user.

In a third aspect, embodiments of the present application provide an information processing method, comprising:
determining, in response to a request to invoke an information processing interface, a processing resource corresponding to the information processing interface; and
using the processing resource corresponding to the information processing interface to perform the steps of:
   detecting a parameter optimization request initiated by a target user and determining a parameter sampling algorithm matching the target user;
   invoking, in response to a sample acquisition request initiated by the target user, the parameter sampling algorithm to generate a test sample;
   determining a simulation result for the test sample based on a preset objective function; and
   outputting the simulation result for the test sample for the target user.

In a fourth aspect, embodiments of the present application provide an information processing apparatus, comprising:
a request detection module for detecting a parameter optimization request initiated by a target user and determining a parameter sampling algorithm matching the target user;
a first response module for invoking, in response to a sample acquisition request initiated by the target user, the parameter sampling algorithm to generate a test sample;
a first simulation module for determining a simulation result for the test sample based on a preset objective function; and
a first output module for outputting the simulation result for the test sample for the target user.

In a fifth aspect, embodiments of the present application provide an information processing apparatus, comprising:
a first sending module for sending the parameter optimization request provided by the target user to a service end for the service end to determine a parameter sampling algorithm matching the target user;
a second sending module for sending a sample acquisition request initiated by the target user to the service end for the service end to invoke, in response to the sample acquisition request, the parameter sampling algorithm to generate a test sample;
a second simulation module for determining a simulation result for the test sample based on a preset objective function; and
a second output module for outputting the simulation result for the test sample for the target user.

In a sixth aspect, embodiments of the present application provide a server, comprising: a storage component and a processing component, wherein the storage component is used for storing one or more computer instructions, the one or more computer instructions being invoked by the processing component; and
the processing component is used for:
   detecting a parameter optimization request initiated by a target user and determining a parameter sampling algorithm matching the target user; invoking, in response to a sample acquisition request initiated by the target user, the parameter sampling algorithm to generate a test sample; determining a simulation result for the test sample based on a preset objective function; and outputting the simulation result for the test sample for the target user.
   In a seventh aspect, embodiments of the present application provide a user end, comprising: a storage component and a processing component, wherein the storage component is used for storing one or more computer instructions, the one or more computer instructions being invoked by the processing component; and
the processing component is used for:
   detecting a parameter optimization request initiated by a target user for a parameter sampling algorithm; sending the parameter optimization request to a service end for the service end to determine a parameter sampling algorithm matching the target user; sending a sample acquisition request initiated by the target user to the service end for the service end to invoke, in response to the sample acquisition request, the parameter sampling algorithm to generate a test sample; determining a simulation result for the test sample based on a preset objective function; and
   outputting the simulation result for the test sample for the target user.

In embodiments of the present application, a parameter optimization request initiated by a target user can be received, and a parameter sampling algorithm matching the target user can be determined. Then, in response to a sample acquisition request initiated by the target user, the parameter sampling algorithm can be invoked to generate a test sample. The test sample may be used for determining a simulation result by way of calculation of an objective function, so as to output the simulation result for the test sample for the target user. Through interaction with the target user, a cloudification service for parameter optimization is implemented to achieve fast parameter optimization in the cloud, thereby improving the efficiency of parameter optimization. In addition, by acquiring the parameter optimization request and sample acquisition request from the user, the service demand of the user is acquired, and by providing effective response and feedback for the service demand of the user, the user is effectively provided with the black box service, so that the extended application of the black box service is realized, thus improving the utilization efficiency of the black box algorithm.

### Brief Description of the Drawings

In order to more clearly illustrate the technical solutions in the embodiments of the present application or in the prior art, a brief description of the drawings required in the description of the embodiments or prior art will be given below, and it is obvious that the drawings in the description below are some embodiments of the present application, and that other drawings can be obtained from these drawings without any creative labor by a person of ordinary skill in the art.
FIG. 1 is a flow chart of an embodiment of an information processing method provided by embodiments of the present application;
FIG. 2 is a flow chart of another embodiment of an information processing method provided by embodiments of the present application;
FIG. 3 is a flow chart of another embodiment of an information processing method provided by embodiments of the present application;
FIG. 4 is a flow chart of another embodiment of an information processing method provided by embodiments of the present application;
FIG. 5 is a flow chart of another embodiment of an information processing method provided by embodiments of the present application;
FIG. 6 is a flow chart of another embodiment of an information processing method provided by embodiments of the present application;
FIG. 7 is an application exemplary diagram of an information processing method provided by embodiments of the present application;
FIG. 8 is a flow chart of another embodiment of an information processing method provided by embodiments of the present application;
FIG. 9 is a flow chart of another embodiment of an information processing method provided by embodiments of the present application;
FIG. 10 is a schematic structural diagram of an embodiment of an information processing apparatus provided by embodiments of the present application;
FIG. 11 is a schematic structural diagram of an embodiment of a server provided by embodiments of the present application;
FIG. 12 is a schematic structural diagram of another embodiment of an information processing apparatus provided by embodiments of the present application; and
FIG. 13 is a schematic structural diagram of an embodiment of a user device provided by embodiments of the present application.

### Detailed Description

In order to make the objectives, technical solutions, and advantages of embodiments of the present application clearer, the technical solutions in the embodiments of the present application will be described clearly and completely with reference to the accompanying drawings in the embodiments of the present application. It is apparent that the described embodiments are merely some of rather than all the embodiments of the present application. Based on the embodiments of the present application, all other embodiments derived by those of ordinary skill in the art without any creative efforts fall within the protection scope of the present application.

The terms used in embodiments of the present application are used solely for the purpose of describing particular embodiments and are not intended to limit the present application. The singular forms "a," "said," and "the" used in the embodiments of the present application and the appended claims are also intended to include plural forms, unless other meanings are clearly indicated in the context, and "multiple" generally includes at least two, but does not exclude the case of including at least one.

It should be understood that the term "and/or" used herein is only an association relationship describing associated objects, indicating that there may be three types of relationships. For example, A and/or B can mean three cases including that A exists alone, both A and B exist at the same time, and B exists alone. In addition, the character "/" here generally indicates that associated objects before and after it are in an "or" relationship.

Depending on the context, the words "in case of" and "if" as used herein may be interpreted as "at the time of" or "when" or "in response to determination" or "in response to identification". Similarly, depending on the context, the phrases "if it is determined" or "if it is identified (stated condition or event)" may be interpreted as "when it is determined" or "in response to determining" or "when it is identified (the stated condition or event)" or "in response to identifying (the stated condition or event)".

It should also be noted that the terms "include", "comprise", or any other variation thereof are intended to cover non-exclusive inclusion, so that goods or systems including a series of elements includes not only those elements, but also other elements not expressly listed, or elements that are inherent to such goods or systems. In the absence of more limitations, an element defined by "including alan ..." does not exclude that the commodity or system including the element further has other identical elements.

The technical solution of the embodiments of the present application can be applied to the process of parameter optimization, and by providing outward black box services, multi-user applications of black box optimization can be realized, thus extending the scope of application of black box optimization and improving the utilization efficiency of black box optimization.

In the prior art, after developing black box algorithms based on the AutoML framework, developers can use the added black box optimization service. The main process of black box optimization is to use a black box algorithm to continuously generate new samples, and use the simulation function that simulates the actual calculation effect of users, i.e., the objective function, to simulate the use effect of the generated new samples to obtain the simulation results for the samples. By continuously generating new samples and continuously performing effect simulation of the newly generated samples, the sample with the highest use effect is selected as the global objective solution from many samples obtained. However, the existing black box algorithms, or black box optimization strategies are mostly used internally by developers, resulting in a narrow range of applications for black box optimization and poor utilization of black box algorithms.

In embodiments of the present application, a parameter optimization request initiated by a target user can be detected, and a parameter sampling algorithm matching the target user can be determined. By providing outward black box services, the target user can be enabled to use the black box algorithm for parameter optimization at any time. After invoking, in response to a sample acquisition request initiated by the target user, the parameter sampling algorithm to generate a test sample, it is possible to determine the simulation result for this test sample based on the preset objective function, and automatically generate a test sample for the target user and complete the simulation calculation for the test sample, where the simulation result is generally the estimation result of the use effect of the test sample, so as to accurately evaluate the test sample, so that after output for the target user, the simulation result for the test sample can be viewed by the target user to determine whether the test sample is usable or not, thereby realizing the effect test of the test sample. Through interaction with the target user, a cloudification service for parameter optimization is implemented to achieve fast parameter optimization in the cloud, thereby improving the efficiency of parameter optimization. In addition, by effectively providing the user with the black box service, the extended application of the black box service is realized, thus improving the utilization efficiency of the black box algorithm.

Embodiments of the present application will be described in detail below in conjunction with the accompanying drawings.

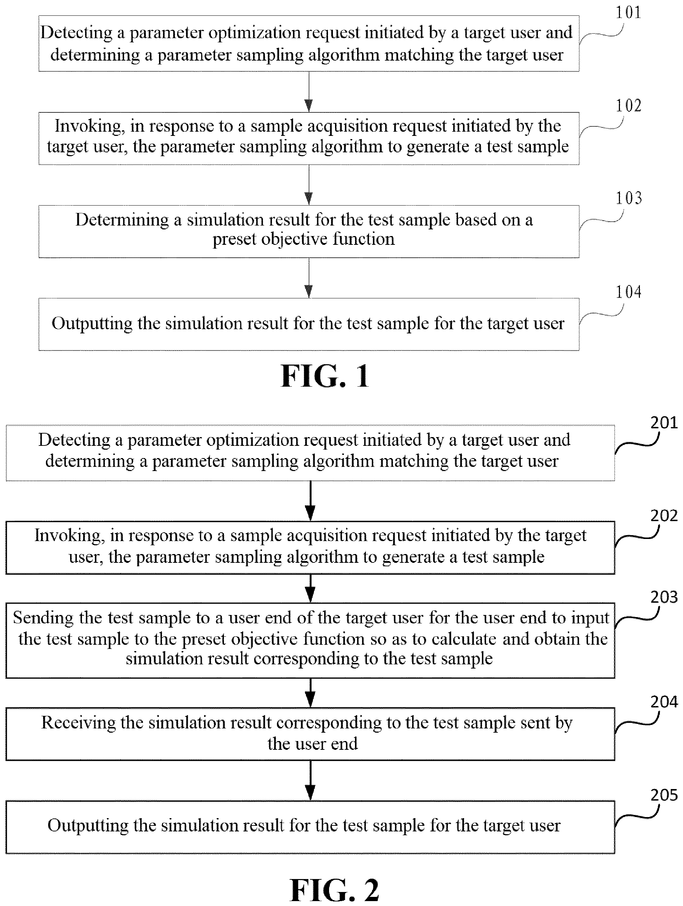

FIG. 1 illustrates a flow chart of an embodiment of an information processing method provided by embodiments of the present application. The method may include the following steps:
101: detecting a parameter optimization request initiated by a target user and determining a parameter sampling algorithm matching the target user.

The information processing method provided by embodiments of the present application can be applied to a service end, wherein the service end is relative to the user end, and the service end and the user end correspond to a C/S (Client-Server) architecture. In practical applications, the service end can be, for example, a computer, a general server, a cloud server, a super personal computer, a laptop computer, a tablet computer, and so on. The user end can be configured on a user device, wherein the user end can be, for example, a mobile phone, a tablet computer, a computer, a virtual reality device, an augmented reality device, a wearable device, and the like. Embodiments of the present application do not limit the specific types of the service end and the user end too much.

Optionally, a plurality of parameter sampling algorithms can be configured in the service end. Different parameter sampling algorithms have different principles but produce the same results, and they can all be used to generate test samples. The general parameter sampling algorithm can be used to generate a sample of a parameter to be optimized, and a preset objective function is used to simulate the use effect of the sample in order to predict the use effect of the sample and thus obtain the simulation result for the sample. By continuously generating samples and obtaining the simulation results for the samples, the target sample with the highest evaluation of the simulation results can be screened and the target sample can be output as the result of parameter optimization to complete the parameter optimization.

The target user can send the parameter optimization request to the service end through the user end. The service end can receive the parameter optimization request sent from the user end of the target user. The parameter optimization request can be generated by the target user based on the parameter to be optimized. Taking content recommendation in the field of e-commerce as an example, when a target user browses an e-commerce website, the website can push to the target user the content that is of interest to that target user. However, since there are various types of content and different types of content have different contributions to the click-through rate, the ratios of recommended content for various types can be used as parameters to be optimized, so as to perform parameter optimization.

The service end can be configured with multiple candidate sampling algorithms, and the target user can specify the parameter sampling algorithm among a plurality of black box algorithms of the parameter optimization request. At this point, the parameter optimization request may include algorithm identification information for the parameter sampling algorithm. The algorithm identification information may be, for example, the name of the algorithm.

In addition, the parameter optimization request may also include parameter information, such as the sample type, the value range, and the number, corresponding to samples of the parameter to be optimized. In some optional embodiments, the parameter sampling algorithm can generate a plurality of samples at the same time for the parameter to be optimized, so as to evaluate the plurality of samples at the same time and improve the efficiency of parameter optimization. In order to identify parameter optimization requests of different users, the parameter optimization request may also include a trial identifier that is set for this parameter optimization trial of the target user, so as to distinguish the optimization processes for different parameters. The target user can also log in to the server using user information such as the user name and password to gain access to the parameter optimization service, thus enabling effective management of the user.

Optionally, in practical applications, when receiving a parameter optimization request, the service end can store the parameter information, the user information, the trial identifier and other information that are in the parameter optimization request to facilitate accurate tracking of the process and result of the parameter optimization service, thereby improving the efficiency of information processing.

102: invoking, in response to a sample acquisition request initiated by the target user, the parameter sampling algorithm to generate a test sample.

After determining the parameter sampling algorithm that matches the target user, the service end can feed back, to the target user, starting prompt information for starting parameter optimization. After sending the parameter optimization request, the target user can receive the starting prompt message corresponding to the parameter optimization that is fed back from the service end. Upon confirming the starting of the black box algorithm, the target user can send a sample acquisition request to the service end. The service end can receive the sample acquisition request sent from the target user, respond to this sample acquisition request, and invoke the parameter sampling algorithm to generate a test sample.

The test sample can be a parameter value that is set for the parameter to be optimized. Specifically, it can be a candidate solution generated by the parameter sampling algorithm for the parameter to be optimized, and if this candidate solution satisfies the optimization condition, it constitutes the final optimization result of the parameter to be optimized.

103: determining a simulation result for the test sample based on a preset objective function.

The objective function can be used to simulate the use effect or use result of the test sample to obtain the simulation result. The objective function can be determined by the optimization objective of the parameter to be optimized. For example, in the content recommendation scenario, the parameter to be optimized can be the parameter corresponding to the recommended content, and the test sample is the recommended content that is found according to the parameter to be optimized and shown to the browsing user, and the higher the probability that the user clicks on the recommended content, the more effective the content recommendation is. Therefore, the prediction model for the click-through rate can be used as the objective function to predict the click-through rate of the recommended content by the browsing user, and the click-through rate obtained through the prediction is the simulation result for the test sample.

104: outputting the simulation result for the test sample for the target user.

Optionally, outputting the simulation result for the test sample for the target user may include: sending the simulation result for the test sample to the user end of the target user for the user end to display the output result for the test sample.

As a possible implementation, when the service end sends the simulation result for the test sample to the user end of the target user, it can be sent to the user end of the target user in the form of a message such as a web page, an instant messaging message, a short message, and the like.

In embodiments of the present application, a parameter optimization request initiated by a target user can be detected, and a parameter sampling algorithm matching the target user can be determined. By providing outward black box services, the target user can be enabled to use the black box algorithm for parameter optimization at any time. After invoking, in response to a sample acquisition request initiated by the target user, the parameter sampling algorithm to generate a test sample, it is possible to determine the simulation result for this test sample based on the preset objective function, and automatically generate a test sample for the target user and complete the simulation calculation for the test sample. Through interaction with the target user, a cloudification service for parameter optimization is implemented to achieve fast parameter optimization in the cloud, thereby improving the efficiency of parameter optimization. In addition, by acquiring the black box service request, the parameter optimization request, and sample acquisition request from the user, the service demand of the user is acquired, and by providing effective response and feedback for the service demand of the user, the user is effectively provided with the black box service, so that the extended application of the black box service can be realized, thus improving the utilization efficiency of the black box algorithm.

In some embodiments, the simulation result for the test sample is generally the evaluation result obtained by evaluating the use effect of the test sample based on the objective function, and the simulation result can accurately evaluate the use effect of the test sample, so that after the simulation result for the test sample is output for the target user, the target user can view the simulation result for the test sample, so as to determine directly through the simulation result whether the test sample meets the requirements, thereby realizing the accurate prompt of the use effect of the test sample. For example, in the aforementioned content recommendation example, when the click-through rate calculation model is used as the objective function, the higher the click-through rate calculated and obtained is, the more effective the recommended content is, and when the click-through rate reaches a threshold value set by the target user, the target user can confirm that the test sample meets the usage conditions, and at this time, the test sample can be provided to the recommendation system so that the recommendation system can generate recommended content based on the test sample and recommend it to the user who uses the recommendation system.

In embodiments of the present application, it can be open to many types of target users such as system developers, scholars, students, system designers, enterprise users, etc., so as to provide the parameter optimization service to different types of target users. When effectively providing the parameter optimization service to a target user, the target user can continuously initiate sample acquisition requests, and the service end can continuously respond to the sample acquisition requests to provide test samples to the target user, so that the target user can be informed of the simulation results for the test samples and select therefrom a target sample that meets their usage conditions. By providing the parameter optimization service to different target users, the extended application of the parameter optimization service can be achieved to enable more users to use the parameter optimization service, which improves the utilization efficiency of parameter optimization.

In embodiments of the present application, the objective function can specifically be a black box algorithm, which cannot be expressed using a clear mathematical formula, and the specific mathematical model of the objective function is usually unknown, and at this time, the parameter optimization request can include a black box optimization request.

As an embodiment, detecting a parameter optimization request initiated by the target user and determining a parameter sampling algorithm matching the target user may include:
detecting a black box optimization request initiated by the target user, and determining the parameter sampling algorithm matching the target user.

The technical solution of embodiments of the present application can be applied in a cloud server, which may include a public cloud and a private cloud. Among them, the public cloud may be a cloud provided on a third-party service for cloud users to use, which is typically used over a network to enable shared resource services and can serve an open public network. The private cloud is built for individual use by one customer and thus provide the most effective control over data, security, and quality of service. Therefore, the private cloud is more secure than the public cloud. For the sake of data security, the processing process can be different for public and private clouds when the user uses the information processing method configured at the cloud.

When the objective function is used to simulate test samples, more user information or data is involved. For the private cloud, when the objective function is used to simulate test samples, since the private cloud serves the user individually and has higher privacy, the simulation process for the test samples can be completed in the private cloud so as to reduce the processing pressure on the user end. For the public cloud, when the objective function is used to simulate test samples, since the public cloud serves many users and does not have privacy, the simulation process for the test samples can be done at the user end in order to ensure the security of the data.

In one possible design, the public cloud and the private cloud can be K8S-based underlying service implementations. K8S (Kubernets, a container cluster management system) can be used to automatically deploy, expand and manage containerized applications. A cluster is a set of nodes, and a cloud server, whether a public or private cloud, can be viewed as a service cluster. A service cluster can consist of multiple nodes that have the K8S platform installed on them to facilitate the management of the nodes in the cluster using the K8S. The information processing method in embodiments of the present application can be applied to the K8S platform, and specifically it can be configured on the custom resource controller (CRD) created in the K8S platform, that is, the CRD in the K8S can be used as a processing component to implement the information processing method.

The technical solution of embodiments of the present application can be configured on the basis of the K8S underlying services, and the functions of each step can be modularized and then configured on the nodes, and interfaces for outward services can be provided on the basis of the functional modules, and the data or information interaction with the user end can be realized through the outward service interfaces to provide parameter optimization services to the users. For example, on the basis of the K8S, components such as a gateway, a data storage component, a black box algorithm component, an early stop component, a web (World Wide Web) page, and a sample collection system, and a database, can be configured in the cloud server, and the technical solution of embodiments of the present application can be completed through the cooperation of these components.

In some embodiments, the gateway can be a Rest (representational state transfer) API (application programming interface) gateway API server (application programming interface service) of the K8S; the data storage component can be a distributed storage component Etcd (storing cluster state information) of the K8S; the black box algorithm component can be a core algorithm component Suggestion Service provided for developers, which may include, for example, one or more of random search/grid search/cmaes (maximum likelihood estimation)/pma (partitioning around medoid); the early stop component can stop parameter simulation having unsatisfactory process as early as possible by means early stop techniques, so as to reduce resource consumption and accelerate the test progress; the web page is mainly used for outwardly outputting test samples and simulation results of the test samples to users, allowing the users to view them in time; the sample collection system (metric system) can collect the black box test samples in the pod (scheduling unit); and the database can be a database such as MySQL, which is used to store the test samples as well as data generated in the simulation and the simulation results.

When the cloud server is a public cloud, the simulation process of test samples can be completed at the user end so as to reduce the possibility of data leakage and improve data security. FIG. 2 illustrates a flow chart of another embodiment of an information processing method provided by embodiments of the present application. The method may include the following steps:
201: detecting a parameter optimization request initiated by a target user and determining a parameter sampling algorithm matching the target user.

Some of the steps in embodiments of the present application are the same as some of the steps illustrated in FIG. 1 and will not be repeated here for the sake of brevity of description. In embodiments of the present application, the parameter optimization request may be sent by the user end to the service end, and the service end may provide an interface for outward communication, i.e., an information processing interface, through which the parameter optimization request sent by the user end is received.

Optionally, when the user end initiates a parameter optimization request to the service end, the request service information, which may be composed of information such as algorithm information, parameter information, user information and/or verification information inputted at the user end, can be sent to the service end in the form of an SDK (Software Development Kit), and the information processing interface of the service end can receive the parameter optimization request encapsulated in an SDK form and obtain the parameter sampling algorithm corresponding to the request service information.

202: invoking, in response to a sample acquisition request initiated by the target user, the parameter sampling algorithm to generate a test sample.

203: sending the test sample to a user end of the target user for the user end to input the test sample to the preset objective function so as to calculate and obtain the simulation result corresponding to the test sample.

The test sample is sent to the user end of the target user and the simulation of the test sample is completed by the user end, and in this way, the risk of data leakage can be reduced and data security can be improved.

Optionally, before sending the test sample to the user end of the target user, the method may further include: receiving a sample test request sent from the user end of the target user, and sending the test sample to the user end of the target user in response to the sample test request.

In another possible design, test prompts can be provided to the target user. For example, test prompt information can be generated, which may include prompt information about the risk of performing the sample test in the public cloud, for example, in the form of text that reminds the target user that "there is a risk of data leakage, do you want to perform the simulation calculation of the test sample on the public cloud". At this point, after receiving the risk prompt information, the user end can output the risk prompt information for the target user, so that the target user can view the risk prompt information and make corresponding feedback operations on the risk prompt information. In some embodiments, the target user can perform a confirmation operation for simulation of the test sample directly at the user end, and when the service end detects the confirmation operation, it can send the test sample to the user end of the target user.

204: receiving the simulation result corresponding to the test sample sent by the user end.

205: outputting the simulation result for the test sample for the target user.

Optionally, outputting the simulation result for the test sample for the target user may include: controlling the target user to output the simulation result for the test sample, for example, when the service end receives the simulation result for the test sample, it can verify the simulation result, and after the verification is successful, it can output the output control information for the simulation result to the user end, and the user end can then output the simulation result in response to the output control information for the simulation result.

In embodiments of the present application, the parameter optimization request initiated by the target user is detected, then the parameter sampling algorithm matching the target user can be determined, and in response to the sample acquisition request initiated by the target user, the parameter sampling algorithm can be invoked to generate a test sample, so as to send the test sample to a user end of the target user for the user end to input the test sample to the preset objective function so as to calculate and obtain the simulation result corresponding to the test sample. By placing the testing work for the test sample at the user end, data transmission is reduced and the interaction efficiency is improved. After receiving the simulation result corresponding to the test sample sent from the user end, the simulation result for the test sample can be output for the target user.

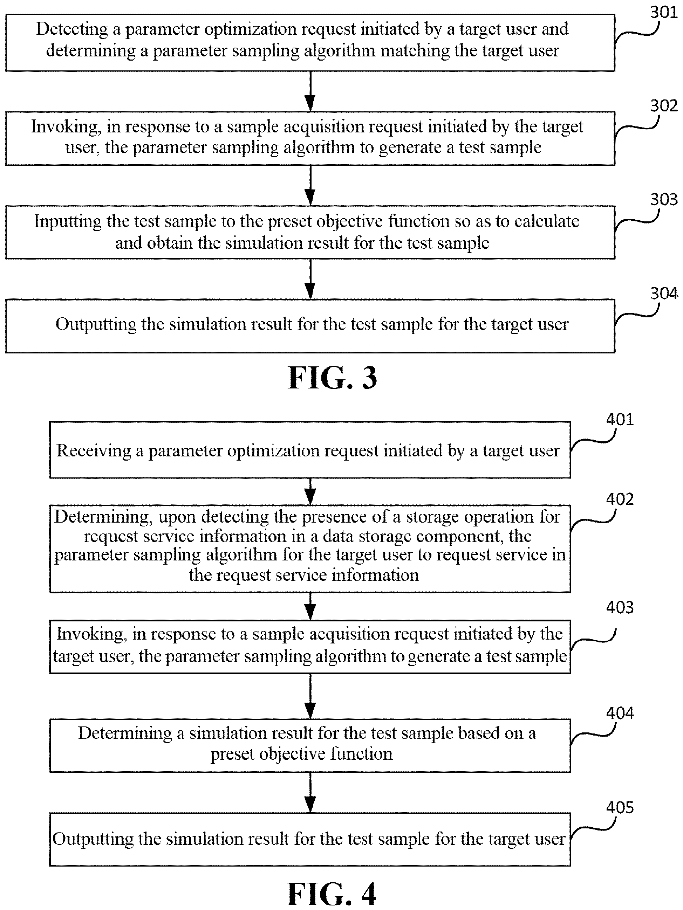

When the cloud server is a private cloud, the simulation process for the test sample can be done at the user end to ensure the security of the data. FIG. 3 illustrates a flow chart of another embodiment of an information processing method provided by embodiments of the present application. The method may include the following steps:
301: detecting a parameter optimization request initiated by a target user and determining a parameter sampling algorithm matching the target user.

Some of the steps in embodiments of the present application are the same as some of the steps in the embodiments illustrated in FIGS. 1 and 2, and will not be repeated here for the sake of brevity of description. In embodiments of the present application, the parameter optimization request may be sent by the user end to the service end, and the service end may provide an interface for outward communication, i.e., an information processing interface, through which the parameter optimization request sent by the user end is received.

Optionally, when the user end initiates a parameter optimization request to the service end, the request service information, which may be composed of information such as algorithm information, parameter information, user information and/or verification information inputted at the user end, can be sent to the service end in the form of a declarative API (Application Programming Interface). Declarative means that the user end submits an API object that is defined for the request service information to declare the specific content and type of the desired request service information. The declarative API can contribute to the project orchestration capabilities of the K8S service, allowing a parameter optimization request to be interacted between the user end and the service end in a certain object format, so as to achieve accurate transmission of information.

When the service end receives the parameter optimization request, it can perform parsing in accordance with the type of information defined in the parameter optimization request as well as the amount of information, so as to obtain the relevant information in the parameter optimization request, thereby determining the parameter sampling algorithm that matches the target user.

It can be seen from the description in the foregoing embodiments that the black box algorithm component may actually include a plurality of classical algorithms, and the parameter sampling algorithm is one of them, and in some embodiments, the parameter sampling algorithm may be directly specified by the target user, that is, at this time, the parameter optimization request may include the algorithm identification information for the parameter sampling algorithm. In some other embodiments, the parameter sampling algorithm may be determined by the service end in accordance with the parameter information provided by the target user, so as to select a more matching black box algorithm for that parameter information and improve the applicability of the parameter sampling algorithm to the current parameter optimization requirements.

302: invoking, in response to a sample acquisition request initiated by the target user, the parameter sampling algorithm to generate a test sample.

303: inputting the test sample to the preset objective function so as to calculate and obtain the simulation result for the test sample.

Optionally, inputting the test sample to the preset objective function so as to calculate and obtain the simulation result for the test sample may include: determining a scheduling execution unit (Pod) of the objective function, and inputting the test sample to the objective function in this Pod for the Pod to calculate and obtain the simulation result for the test sample. The Pod is a computing module provided by the K8S service.

304: outputting the simulation result for the test sample for the target user.

In embodiments of the present application, when the service end detects the parameter optimization request initiated by the target user and determines the parameter sampling algorithm matching the target user can be determined, it can invoke, in response to the sample acquisition request initiated by the target user, the parameter sampling algorithm to generate a test sample, and then input the test sample input to the preset objective function so as to calculate and obtain the simulation result for the test sample, and output the simulation result for the test sample for the target user. Completing the simulation process for the test sample at the service end can reduce the processing pressure on the user end, and in addition, since the computational efficiency of the service end is generally higher than that of the user end, the processing efficiency of test samples can be improved. By providing outward black box services, the target user can be allowed to use the black box algorithm for parameter optimization at any time, thus improving the efficiency of using the black box algorithm.

Optionally, when the service end is a cloud server, the cloud server can be obtained by integrating a plurality of nodes, and the parameter sampling algorithm can be run by one of the nodes. As an embodiment, after detecting a parameter optimization request initiated by the target user and determining a parameter sampling algorithm matching the target user, the method further includes:
determining a target node for starting the parameter sampling algorithm; and
said invoking, in response to a sample acquisition request initiated by the target user, the parameter sampling algorithm to generate a test sample comprises:
   sending, in response to the sample acquisition request, the sample acquisition request to the target node starting the parameter sampling algorithm; and
   acquiring, through the target node, the test sample generated by the parameter sampling algorithm.

Optionally, the cloud server is a scale-based server cluster, which may be composed of a plurality of computing nodes. The target node for starting the parameter sampling algorithm can be determined by means of a node query Optionally, determining the target node for starting the parameter sampling algorithm may include: querying the target node for starting the black box algorithm from a plurality of nodes via a reverse proxy. As a possible implementation, the operation status of the black box algorithm in each node can be detected. Black box algorithms can be separately configured in different nodes, and one or more black box algorithms can be configured in any one node.

In a cloud server with K8S as the underlying service, the parameter sampling algorithm can be run in one of the nodes in the cloud server and the user end can actually acquire the test samples from the target node running the parameter sampling algorithm. Usually, the communication between the user end and the target node can be implemented through a router.

As a possible implementation, inputting the test sample to a preset objective function so as to calculate and obtain the simulation result for the test sample may include:
establishing a simulation module for the objective function; and
inputting the test sample to the simulation module so as to calculate and obtain the simulation result for the test sample.

The objective function depends on the support of the computing module during operation, so the simulation module is created for the objective function in order to enable the objective function to perform the simulation calculation of the test sample properly. In the K8S service, the simulation module may be a Pod.

The server may receive at the same time parameter optimization requests sent separately from a plurality of user ends, so as to serve the plurality of user ends at the same time, or one user end may create different parameter optimization requests for different optimization requirements, and the server may also receive at the same time a plurality of parameter optimization requests sent from one user end, so that in order to distinguish between different black box optimization processes, the target user can send a simulation trial identifier to the service end while initiating a parameter optimization request, so as to distinguish between different black box services.

Therefore, as a possible implementation, the method may further include:
receiving a simulation trial identifier sent by the target user; and
storing the simulation result for the test sample for the target user based on the simulation trial identifier.

Optionally, receiving the simulation trial identifier sent by the target user may specifically be: receiving the simulation trial identifier sent by the target user while detecting the parameter optimization request initiated by the target user. The simulation trial identifier is used to identify the simulation trial for the test sample in the parameter optimization request initiated by the target user. For example, when a target user A and a target user B initiate parameter optimization requests at the same time, the target user A may also send a simulation trial identifier a to the cloud server when it initiates a parameter optimization request, and the target user B may also send a simulation trial identifier b to the cloud server when it initiates a parameter optimization request. When the target user A initiates a sample acquisition request, a test sample generated for the target user A and a simulation result for the test sample can be identified by the simulation trial identifier a. When the target user B initiates a sample acquisition request, a test sample generated for the target user B and a simulation result for the test sample can be identified by the simulation trial identifier b, so as to distinguish them from the test sample generated for the target user A and the simulation result that are identified using the simulation trial identifier a.

In practical applications, when the service end provides a black box optimization service, the black box optimization process can be initiated based on the parameter sampling algorithm specified by the user. FIG. 4 illustrates a flow chart of another embodiment of an information processing method provided by embodiments of the present application. The method may include:
401: receiving a parameter optimization request initiated by a target user.

Here, the parameter optimization request includes request service information for a parameter sampling algorithm.

Optionally, before receiving the parameter optimization request initiated by the target user, the method may further include: sending a plurality of black box algorithms to a user end of the target user for the user end to output the plurality of black box algorithms for the target user and select a parameter sampling algorithm from the plurality of black box algorithms. The request service information may include an algorithm name, algorithm identification, and other information that can be used to identify the black box algorithm.

402: determining, upon detecting the presence of a storage operation for the request service information in the data storage component, the parameter sampling algorithm for the target user to request service in the request service information.

The request service information is composed of information such as algorithm information, parameter information, user information and/or verification information inputted at the user end. After the service end performs verification and other operations on the parameter optimization request, the request service information can be stored. In the K8S service, the request service information is usually stored using etcd (a distributed consistency protocol). The etcd is a distributed storage component developed in the kubenetes, which can store network configurations and object state information in a server cluster.

Optionally, the operation of the etcd to store the request service information may specifically be to detect a storage action of the etcd, and in the case of the presence of a storage action in the etcd, a storage message may be initiated to the processing component to enable the storage component to determine the presence of a storage operation for the request service information in the data storage component in a timely manner.

403: invoking, in response to a sample acquisition request initiated by the target user, the parameter sampling algorithm to generate a test sample.

404: determining a simulation result for the test sample based on a preset objective function.

405: outputting the simulation result for the test sample for the target user.

Some of the steps in embodiments of the present application are the same as some of the steps in the embodiments illustrated in FIGS. 1 to 3, and will not be repeated here for the sake of brevity of description.

In embodiments of the present application, the parameter optimization request initiated by the target user may include the request service information for the parameter sampling algorithm specified by the target user. The service end can detect the storage behavior of the data storage component, and can determine, upon detecting the presence of a storage operation for the request service information in the data storage component, the parameter sampling algorithm for the target user to request service in the request service information. The user specifies the black box service algorithm to achieve targeted services and enhance the user's controllability of the black box algorithm. After determining the parameter sampling algorithm, in response to the sample acquisition request initiated by the target user, the parameter sampling algorithm can be invoked to generate the test sample. Based on the preset objective function, the simulation result for the test sample is determined, so as to output the simulation result for the test sample for the target user. By providing outward black box services, the target user can be allowed to choose the parameter sampling algorithm for parameter optimization at any time, thus improving the efficiency of using the black box algorithm.

In practical applications, the request service information may also include verification information. The verification information may include identity verification information, permission verification information and the like for the target user.

In one possible design, after receiving the parameter optimization request sent by the target user, the method may also include:
verifying the parameter optimization request of the target user based on the verification information in the request service information to obtain a verification result; and
storing the request service information to the data storage component if the verification result is a successful verification.

Optionally, the verification information may include the identity verification information and the permission verification information for the target user, and the parameter optimization request of the target user is verified based on the verification information in the request service information, and obtaining the verification result may include: verifying the user identity of the target user based on the identity verification information in the request service information to obtain an identity verification result;
verifying the usage permission of the target user based on the permission verification information in the request service information to obtain a permission verification result; and
combining the identity verification result and the permission verification result to determine the verification result.

Further, optionally, combining the identity verification result and the permission verification result to determine the verification result may include: determining the verification result to be a successful verification if the identity verification result is a successful verification and the permission verification result is a successful verification; and determining the verification result to be a failed verification if the identity verification result is a failed verification or the permission verification result is a failed verification.

In some embodiments, if the verification result is a failed verification, verification failure prompt information is fed back to the user end of the target user for the user end to output the verification failure prompt information for the target user, so as to remind the user of the failure reason of the identity information or permission information, and to perform information modification or permission modification according to the failure reason, and re-perform service application.

As a further embodiment, determining, upon detecting the presence of a storage operation for the request service information in a data storage component, the parameter sampling algorithm for the target user to request service in the request service information may include:
acquiring, via a resource controller, a storage notification message initiated by the data storage component when storing the request service information; and
determining, based on the storage notification message, the parameter sampling algorithm for the target user to request service in the request service information.

A resource controller may be configured in the service end, and the storage notification message initiated by the data storage component when storing the request service information is acquired via the resource controller. Through the storage notification message, the parameter sampling algorithm for the target user to request service in the request service information can be determined.

As a further embodiment, before invoking, in response to a sample acquisition request initiated by the target user, the parameter sampling algorithm to generate a test sample, the method may further include:
receiving the sample acquisition request initiated by the target user for the parameter sampling algorithm.

In some embodiments, after determining a simulation result for the test sample based on a preset objective function, the method may further include:
acquiring a judgment result as to whether the test sample satisfies a preset convergence condition;
determining a target sample based on the test sample if the judgment result is that the test sample satisfies the convergence condition; and
returning, if the judgment result is that the test sample does not satisfy the convergence condition, to said invoking, in response to a sample acquisition request initiated by the target user, the parameter sampling algorithm to generate a test sample to continue execution.

Optionally, determining the target sample based on the test sample includes:
acquiring historical test samples separately corresponding to N sample acquisition requests before the test sample, and selecting a target sample with the highest simulation result from the test sample and the N historical test samples based on simulation results separately corresponding to the test sample and the N historical test samples.

The simulation result may be specifically result indicator data, the higher the result indicator data, the better the simulation result, and the lower the result indicator data, the worse the simulation result.

In some embodiments, whether the test sample meets the preset convergence condition may be determined by whether the number of iterations corresponding to the test sample reaches a preset threshold number of iterations, and if yes, it is determined that the test sample meets the preset convergence condition, and if not, it is determined that the test sample does not meet the preset convergence condition.

In some embodiments, whether the test sample meets the preset convergence condition may be determined by whether the simulation result for the test sample meets a preset result threshold, and if yes, it is determined that the test sample meets the preset convergence condition, and if not, it is determined that the test sample does not meet the preset convergence condition. Whether the simulation result meets the preset result threshold may specifically include the simulation result being greater than the preset result threshold, or alternatively, the simulation result being less than the preset result threshold. Whether the simulation result is greater than the result threshold or less than the result threshold can be determined specifically according to the computational implications of the objective function.

To improve the efficiency of parameter processing, a plurality of test samples may be generated at a time in a batch processing manner.

In some embodiments, invoking, in response to a sample acquisition request initiated by the target user, the parameter sampling algorithm to generate a test sample may include:
invoking, in response to the sample acquisition request initiated by the target user, the parameter sampling algorithm to generate a plurality of test samples in a batch processing manner.

Determining a simulation result for the test sample based on a preset objective function may include:
determining simulation results separately corresponding to the plurality of test samples based on the preset objective function.

Outputting the simulation result for the test sample for the target user may include:
outputting the simulation results separately corresponding to the plurality of test samples for the target user.

Optionally, when determining simulation results separately corresponding to the plurality of test samples based on the preset objective function, if it is conducted on a public cloud, the plurality of test samples can be sent to the user end, and the sample simulation of the plurality of test samples can be completed at the user end. If it is conducted on a private cloud, the sample simulation of the plurality of test samples can be completed directly at the cloud.

Optionally, determining simulation results separately corresponding to the plurality of test samples based on the preset objective function specifically may include: inputting the plurality of test samples separately to the objective function so as to calculate and obtain the simulation results separately corresponding to the plurality of test samples.

In some embodiments, the step of acquiring simulation results can be performed on the cloud server or on the user end, which can be set according to the actual usage requirements. When either of the service end or the user end obtains the simulation results, it can send the simulation results to the other end.

In one possible design, determining simulation results separately corresponding to the plurality of test samples based on the preset objective function may include:
creating a plurality of simulation modules for the objective function;
matching, from the plurality of simulation modules, target simulation modules separately for the plurality of test samples; and
inputting any test sample to the target simulation module corresponding to that test sample so as to calculate and obtain a simulation result for the test sample so as to obtain the simulation results separately corresponding to the plurality of test samples.

In another possible design, determining simulation results separately corresponding to the plurality of test samples based on the preset objective function may include:
sending the plurality of test samples to the user end of the target user for the user end to input the plurality of test samples separately to the preset objective function so as to calculate and obtain the simulation results separately corresponding to the plurality of test samples; and
receiving the simulation results separately corresponding to the plurality of test samples that are sent by the user end.

In some embodiments, the method may further include: collecting the simulation results for the test samples by means of the SideCar collection approach in the K8S, and storing the simulation results for the test samples using the etcd.

The technical solution of embodiments of the present application can be applied in many fields to solve the problem of parameter optimization. In the allocation process of electric power resources and water resources, the allocation result of electric power resources or water resources in each area can be used as a parameter to be processed to initiate a parameter optimization request, and the parameter to be processed can specifically be the amount of resources corresponding to that each area, which, for example, may be the load capacity of the area in the electric power scenario.

As an embodiment, detecting a parameter optimization request initiated by the target user and determining a parameter sampling algorithm matching the target user may include:
receiving a parameter optimization request initiated by a target user for a parameter to be processed of a target resource;
determining a parameter sampling algorithm matching a processing objective of the target resource;
said invoking, in response to a sample acquisition request initiated by the target user, the parameter sampling algorithm to generate a test sample comprises:
   invoking, in response to a sample acquisition request initiated by the target user for the parameter to be processed, the parameter sampling algorithm to generate a test sample for the parameter to be processed; and
   outputting the simulation result for the test sample for the target user includes:
      outputting for the target user a simulation result corresponding to the test sample for the parameter to be processed for the target user to process the target resource in accordance with the test sample.

Optionally, the target resources may include electric power resources, water resources, data resources, and the like, and there are no excessive restrictions on the specific form and content of the resources in embodiments of the present application.

The resource element specifically represented by the parameter to be processed may be determined according to the processing objective of the target resource. For example, the processing objective of the target resource can be the electric power load capacities set for different areas so as to minimize the total energy consumption of the grid. At this point, the electric power load capacities of different areas can be the parameters to be processed, and the processing objective can be the calculation function of the total energy consumption of the grid. The target parameters can be electric power load capacities of the various areas in the case of the minimum obtained total energy consumption of the grid. According to the value of the parameter to be processed in the target parameters, the processing information for the target resource can be generated, that is, in accordance with the value of the parameter to be processed in the target parameters, prompt information or a setting instruction for the electric power load capacity of each area can be generated, and with the setting instruction, the capacity setting can be performed according to the electric power load capacity of each area. The prompt information can be displayed to the user for the user to perform capacity setting for each area according to the electric power load capacity of the area indicated in the prompt information.

In the field of e-commerce, the parameter optimization problem is also involved. Take the common product recommendation as an example, due to different browsing characteristics of users, such as the consumption habits, fields of concern, and historical browsing behaviors, the content or products recommended for users are also different. In practical application, in order to improve the user's click-through rate, the user's browsing characteristics such as consumption habits and fields of concern can be parameterized to generate different browsing parameters, and through the setting of the plurality of browsing parameters, accurate analysis of the characteristics of the user's click-through objective can be achieved, so as to find the target products with a higher degree of user attention. The solution for performing parameter sampling of a plurality of browsing parameters and conducting parameter trials to determine the click-through rate of the user can be applied to the technical solution of embodiments of the present application to improve the efficiency of trials.

Therefore, as an embodiment, detecting a parameter optimization request initiated by the target user and determining a parameter sampling algorithm matching the target user includes:
receiving a parameter optimization request for a browsing parameter generated for a browsing operation initiated by the target user; and
determining a parameter sampling algorithm matching a browsing objective of the target user;
optionally, invoking, in response to a sample acquisition request initiated by the target user, the parameter sampling algorithm to generate a test sample includes:
   invoking, in response to a sample acquisition request initiated by the target user for the browsing parameter, the parameter sampling algorithm to generate a test sample for the browsing parameter; and
   outputting the simulation result for the test sample for the target user includes:
      outputting for the target user the simulation result corresponding to the test sample for the browsing parameter for the target user to configure the browsing parameter in accordance with the test sample.

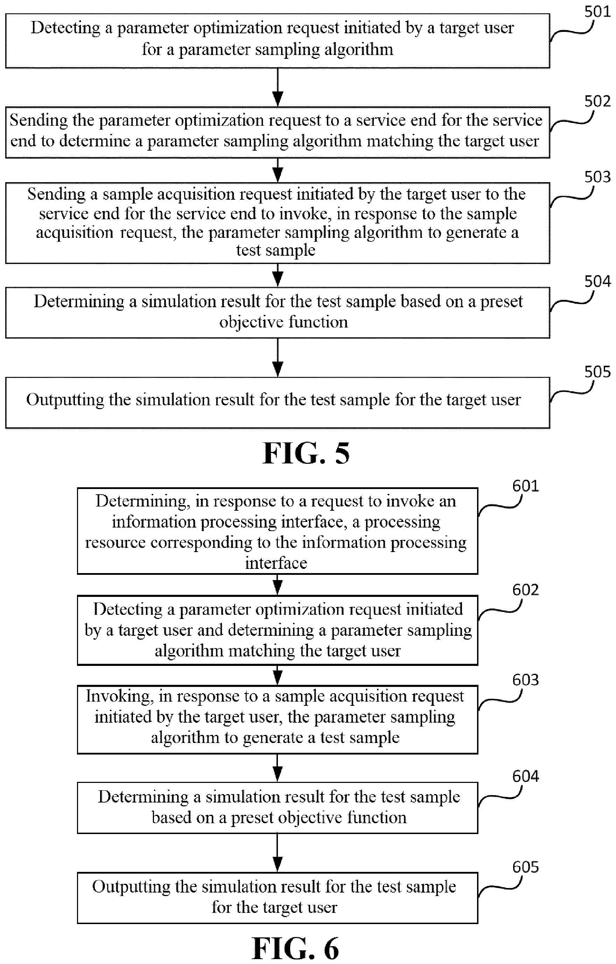

FIG. 5 illustrates a flow chart of another embodiment of an information processing method provided by embodiments of the present application. The method may include:
501: detecting a parameter optimization request initiated by a target user for a parameter sampling algorithm.

The technical solution of embodiments of the present application can be applied to the user end. The user end can be, for example, an electronic device such as a mobile phone terminal, a computer, a laptop, a tablet computer, a virtual reality/augmented reality device, and an Internet of Things (IoT) terminal, and there are no excessive restrictions on the specific type of the electronic device in embodiments of the present application.

The specific contents performed by the user end as well as the technical effect have been described in detail in the aforementioned embodiments, and will not be repeated here.
502: sending the parameter optimization request to a service end for the service end to determine a parameter sampling algorithm matching the target user;
503: sending a sample acquisition request initiated by the target user to the service end for the service end to invoke, in response to the sample acquisition request, the parameter sampling algorithm to generate a test sample.
504: determining a simulation result for the test sample based on a preset objective function.
505: outputting the simulation result for the test sample for the target user.

Optionally, the objective function may be a black box algorithm, and in this case, the parameter optimization request is a black box optimization request.

In embodiments of the present application, the user end can detect the parameter optimization request initiated by the target user for the parameter sampling algorithm, and then send the parameter optimization request to the service end, and upon receiving the parameter optimization request sent from the user end, the service end can determine the parameter sampling algorithm corresponding to the target user. After that, the user end can also send the sample acquisition request initiated by the target user to the service end, and upon receiving the sample acquisition request, the service end can invoke the parameter sampling algorithm to generate the test sample, and determine the simulation result for the test sample based on the preset objective function, and output the simulation result for the test sample for the target user. The user end provides the work of generation of sample parameters and simulation of sample parameters for the target user, and through the interaction with the target user, the parameter optimization service is realized, and thus the target user can be allowed to choose the parameter sampling algorithm for parameter optimization at any time, thus improving the efficiency of using the black box algorithm.

Optionally, determining the simulation result for the test sample based on the preset objective function may include: receiving the test sample sent by the service end, and inputting the test sample to the objective function so as to calculate and obtain the simulation result for the test sample.

Optionally, determining the simulation result for the test sample based on the preset objective function may include: receiving the simulation result for the test sample sent by the service end, wherein this simulation result is calculated and obtained by inputting the test sample to the simulation function.

As an embodiment, determining the simulation result for the test sample based on the preset objective function may include:
receiving the test sample sent by the service end; and
inputting the test sample to the objective function so as to calculate and obtain a calculation result corresponding to the test sample.

In one possible design, receiving the test samples sent by the service end may include:
receiving a plurality of test samples sent by the service end, wherein the plurality of test samples are generated by the service end by invoking the parameter sampling algorithm in a batch processing manner; and
determining the simulation result for the test sample based on the preset objective function may include:
   inputting the plurality of test samples separately to the objective function so as to calculate and obtain calculation results separately corresponding to the plurality of test samples.

As another embodiment, determining the simulation result for the test sample based on the preset objective function includes:
receiving the simulation result corresponding to the test sample sent by the service end, wherein the simulation result is calculated and obtained by inputting the test sample to the preset objective function by the service end.

In some embodiments, after determining a simulation result for the test sample based on a preset objective function, the method may further include:
acquiring a judgment result as to whether the test sample satisfies a preset convergence condition;
determining a target sample based on the test sample if the judgment result is that the test sample satisfies the convergence condition; and
returning, if the judgment result is that the test sample does not satisfy the convergence condition, to said sending a sample acquisition request initiated by the target user to the service end for the service end to invoke, in response to the sample acquisition request, the parameter sampling algorithm to generate a test sample to continue execution.

Optionally, determining the target sample based on the test sample may include:
acquiring historical test samples separately corresponding to N sample acquisition requests before the test sample, and selecting a target sample with the highest simulation result from the test sample and the N historical test samples based on simulation results separately corresponding to the test sample and the N historical test samples.

The simulation result can be result indicator data, the higher the result indicator data, the better the simulation result, and the smaller the result indicator data, the worse the simulation result.

It should be noted that some of the steps in embodiments of the present application, when executed at the user end or executed at the service end, perform the same specific steps, and the specific implementation of each step and the technical effect have been described in detail in the preceding embodiments and will not be repeated here.

FIG. 6 illustrates a flow chart of another embodiment of an information processing method provided by embodiments of the present application. The method may include:
601: determining, in response to a request to invoke an information processing interface, a processing resource corresponding to the information processing interface; and
using the processing resource corresponding to the information processing interface to perform the steps of:
   602: detecting a parameter optimization request initiated by a target user and determining a parameter sampling algorithm matching the target user.
   603: invoking, in response to a sample acquisition request initiated by the target user, the parameter sampling algorithm to generate a test sample.
   604: determining a simulation result for the test sample based on a preset objective function.
   605: outputting the simulation result for the test sample for the target user.

The specific steps performed by the processing resources corresponding to the information processing interface in embodiments of the present application are the same as the processing steps performed by the information processing methods illustrated in FIGS. 1 to 4. The specific implementation of each technical feature and the technical effect have been described in detail in the embodiments illustrated in FIGS. 1 to 4, and will not be repeated here.

In practical applications, the user end of the target user can be, for example, an electronic device such as a mobile phone terminal, a computer, a laptop, a tablet computer, a virtual reality/augmented reality device, and an Internet of Things (IoT) terminal, and there are no excessive restrictions on the specific type of the electronic device in embodiments of the present application. The user end can interact with the user, and the user end can communicate with a server capable of optimizing the parameters.

For ease of understanding, taking a hyper-parameter composed of the network depth, the number of iterations, and the number of neurons per layer of the machine learning model as an example for the parameter that needs to be optimized, the cloud service end provides the information processing method, and an application example of embodiments of the present application will be introduced in detail by taking interaction with the user end as an example.

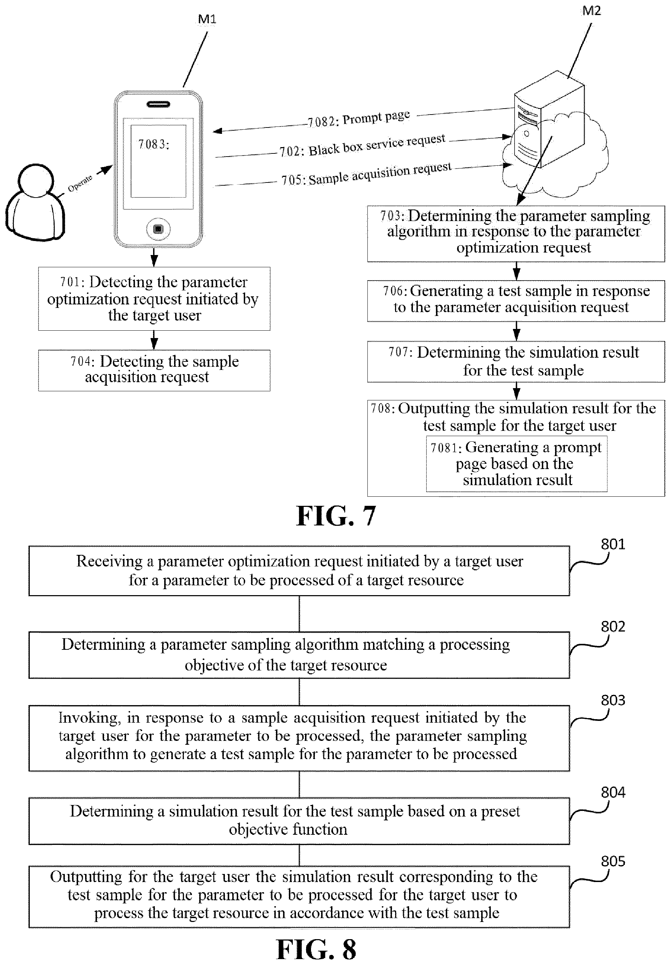

Referring to FIG. 7, an illustration is given taking an example in which the user end is a mobile phone terminal M1 and the server is a cloud server M2. The mobile phone terminal M1 can detect 71 the parameter optimization request initiated by the user for the hyper-parameter composed of the network depth, the number of iterations, and the number of neurons per layer of the machine learning model. The mobile phone terminal M1 can send 702 the parameter optimization request to the cloud server M2. The cloud server M2 can determine 703, upon detecting the parameter optimization request, the parameter sampling algorithm matching the target user.

After that, the mobile phone terminal M2 can detect 704 the sample acquisition request initiated by the target user and send the sample acquisition request 705 to the cloud server M2.

After that, the cloud server M2 can invoke, in response to the sample acquisition request initiated by the target user, the parameter sampling algorithm to generate 706 a test sample. The cloud server can also determine 707 the simulation result for the test sample based on the preset objective function; and output 708 the simulation result for the test sample for the target user.

Optionally, the cloud server M2 outputting the simulation result for the test sample for the target user may include: generating 7081 a prompt page for the simulation result based on the test sample, and sending 7082 the prompt page to the mobile phone terminal M1. After the mobile phone terminal M1 receives the prompt page, it can display 7083 the prompt page on a display screen.

In addition, the simulation result for the test sample can also be output in the form of data strings, short message information or instant messaging messages, and the like, and there are no excessive restrictions on the specific output manner of the simulation result in embodiments of the present application.

The technical solution of embodiments of the present application can be applied in a variety of fields such as artificial intelligence interaction, data retrieval, content recommendation, click-through rate prediction, intelligent factory, industrial control, and so on, and has stronger applicability especially in the field of content recommendation, such as content recommendation in the field of e-commerce, live video broadcasting, social networking, and online education, and in the field of resource allocation, such as financial product allocation, electric power resources, water resources, supply chain allocation.

For ease of understanding, the following problem cases in the actual field scenarios are used as examples to introduce embodiments of the present application in detail.
(1) The field of e-commerce. The application scenarios such as product recommendation, content recommendation and calculation of advertisement click-through rates in the feature search and live broadcast scenarios are most common in the field of e-commerce, and this embodiment provides an example deployment with a content recommendation scenario as an example. The general recommendation process in the recommendation scenario can be as follows: performing parameterization setting of the elements of the selected scenario, obtaining parameters that influence the scenario, and using the parameters to identify different features of the scenario. The service end can show a plurality of black box algorithms for the target user and describe in detail the functions and the effect of each black box algorithm. The target user can select a parameter sampling algorithm from the plurality of black box algorithms, and initiate a parameter optimization request to the service end through the user end. When the service end obtains the parameter optimization request initiated by the target user, it can determine the parameter sampling algorithm selected by the target user.

During the optimization process of a parameter, several trials of the parameter are required to obtain the target parameter. In the process of any one parameter trial, the target user can initiate a sample acquisition request corresponding to a parameter matching the recommendation scenario through the user end, at which time the service end can respond to the sample acquisition request initiated by the target user and invoke the parameter sampling algorithm to generate a test sample. After that, a simulation result for the test sample is determined based on the preset objective function. After the service end determines the simulation result, it can send the simulation result to the user end, and the user end shows the simulation result for the test sample for the target user. By viewing the simulation result, the target user can judge whether the test sample can be used or not. If the test sample is judged by the target user to meet the usage conditions, the target user can use the test sample to set the recommendation elements and recommend content to the user according to the recommendation elements.

As an example, in the click word recommendation scenario, when a user clicks the query box in an APP (application), this system will recommend some query terms for that user. The purpose of recommending query terms for the user is to explore their potential purchase needs, increase the user's stickiness of use and increase the total number of goods transactions. The search system uses the following architecture, which combines a deep learning Encode-Decode network, i.e., a target network, to predict the recommendation of query terms. It is assumed that the selection of target parameters is performed for the number of query terms. In the prior art, the parameter value of the parameter to be optimized composed of the number of query terms is set manually according to manual experience. Using the data processing method of the present patent, parameter trials can be performed automatically on the number of query terms according to the above parameter optimization process, and the test sample obtained by the service end is the number of query terms, and the simulation result for the test sample is the click-through rate or transaction rate obtained after the setting according to that number of query terms.

(2) The social field. In the social field, content recommendation for social users and material recommendation for students are also common. Recommendations in the social field are usually as follows: social users browse social applications, and the applications display social content of interest to the users in the display interface. Generally, recommendations in the social field are usually as follows: options such as historical browsing behavior, areas of interest, and user information of users constitute feature parameters, and combinations of different options can constitute parameters to be processed. When test samples corresponding to the parameters to be processed are determined, the recommendation of social content can be made according to the test samples. In order to find the content of interest to social users, the number and the type of parameters can be optimized to obtain accurate social user content for testing.

The technical solution of embodiments of the present application can be configured in the cloud server, and the parameter optimization request can be initiated by the operation and maintenance personnel, who can use the user information, social type, and so on, as the parameters to be processed, and continuously generate test samples using the parameter sampling algorithm. Simulation results for test parameters are obtained by simulating the use effect of the test samples, so as to select target samples from a plurality of test samples. Further, the feature parameters used for social content recommendation are set according to the target samples, so as to achieve accurate recommendations.

(3) The financial field. Simulation of stock indices is a very important problem, and models based on linear regression, SVM (support vector machines) and LSTM (Long Short-Term Memory), etc., are common for the simulation problem of stock indices. Before the model is used, a suitable model needs to be established. Here, the model training process may involve many hyper-parameters, such as time_step (time step), feature_dim (feature dimension), hidden feature, and so on in LSTM, and may also involve contextual features, such as the macro-factors, the micro-factors and emergencies of the market, which will affect the selection of parameters. Using the technology of the present patent, test samples can be generated for hyper-parameters that need to be set in the financial field, and corresponding simulation results can be obtained by performing simulations on the test samples.

The simulation results are output to the target user for viewing, so that when selecting a target sample with good simulation results from many test samples, the target user uses the target sample to construct a machine learning model corresponding to the index simulation problem, and perform model training to obtain the model parameters. Then, the machine learning model obtained through training is used to perform simulation and calculation of data such as the RMSE (Root Mean Squared Error) difference values of the actual stock index for the index simulation problem.

(4) The field of resource allocation. Taking the allocation of electric power resources as an example. The allocation of electric power resources usually involves many regions, and each region can be represented using the corresponding parameters, which parameters can separately allocate a certain percentage of resources, and the allocation of resources can affect the regional economy, population, environment and other information.

The technical solution of embodiments of the present application can be applied to the problem of dynamic pricing in the electric power market and the problem of economic load allocation of electric power. The following mainly provides a detailed description of the specific application fields of electric power systems.

In the dynamic pricing problem of the electric power market, the impact of the user type and the amount of electricity consumption on the electric power market is critical, and a parameter optimization request can be initiated taking parameters such as the user type and the amount of electricity consumption as parameters to be processed. In response to the parameter optimization request, a parameter sampling algorithm is determined and then used to generate test samples for the parameters to be processed. The setting of candidate parameters for the benefit/cost in the electric power system can be used as the final optimization objective to determine the objective function corresponding to this optimization objective. Using the objective function, the use result of the test sample can be simulated to obtain a simulation result, which represents the value of the benefit/cost of the system. After that, a target sample can be selected from many test samples by continuously generating test samples and simulating the test samples.

In the problem of economic load distribution of electric power, the electric power supplier can provide electric power resources to a plurality of areas at the same time, the electric power load capacity of each area can be used as a candidate parameter, and the total energy consumption of the grid can be used as the output of the objective function. Using the technical solution of embodiments of the present application, the target user can initiate a parameter optimization request taking the respective electric power load capacity of each area as the parameter to be processed. After determining the parameter sampling algorithm matching the parameter optimization request of the target user, the sample acquisition request initiated by the target user can be received to invoke the parameter sampling algorithm to continuously review test samples corresponding to the test value of the electric load capacity of each area. In the field of load distribution of electric power, the objective function may be a nonlinear constraint relationship between the electric load capacity and the total energy consumption of the grid, and the simulation result can be obtained by simulating the test sample using the objective function. After that, simulations are continuously performed on the test samples of the electric power load capacity of each area, and the highest simulation result is selected from them. The test sample corresponding to the highest simulation result can be used to generate the load capacity allocation strategy.

For ease of understanding, the technical solution of embodiments of the present application is described in detail by taking the field of e-commerce as an example. FIG. 8 illustrates a flow chart of an embodiment of an information processing method provided by embodiments of the present application. The method may include the following steps:
801: receiving a parameter optimization request initiated by a target user for a parameter to be processed of a target resource.
802: determining a parameter sampling algorithm matching a processing objective of the target resource.
803: invoking, in response to a sample acquisition request initiated by the target user for the parameter to be processed, the parameter sampling algorithm to generate a test sample for the parameter to be processed.
804: determining a simulation result for the test sample based on a preset objective function.
805: outputting for the target user a simulation result corresponding to the test sample for the parameter to be processed for the target user to process the target resource in accordance with the test sample.

In the allocation process of electric power resources and water resources, the allocation result of electric power resources or water resources in each area can be used as a parameter to be processed to initiate a parameter optimization request, and the parameter to be processed can specifically be the amount of resources corresponding to that each area, which, for example, may be the load capacity of the area in the electric power scenario.

Optionally, the target resources may include electric power resources, water resources, data resources, and the like, and there are no excessive restrictions on the specific form and content of the resources in embodiments of the present application.

The resource element specifically represented by the parameter to be processed may be determined according to the processing objective of the target resource. For example, the processing objective of the target resource can be the electric power load capacities set for different areas so as to minimize the total energy consumption of the grid. At this point, the electric power load capacities of different areas can be the parameters to be processed, and the processing objective can be the calculation function of the total energy consumption of the grid. The target parameters can be electric power load capacities of the various areas in the case of the minimum obtained total energy consumption of the grid. According to the value of the parameter to be processed in the target parameters, the processing information for the target resource can be generated, that is, in accordance with the value of the parameter to be processed in the target parameters, prompt information or a setting instruction for the electric power load capacity of each area can be generated, and with the setting instruction, the capacity setting can be performed according to the electric power load capacity of each area. The prompt information can be displayed to the user for the user to perform capacity setting for each area according to the electric power load capacity of the area indicated in the prompt information.

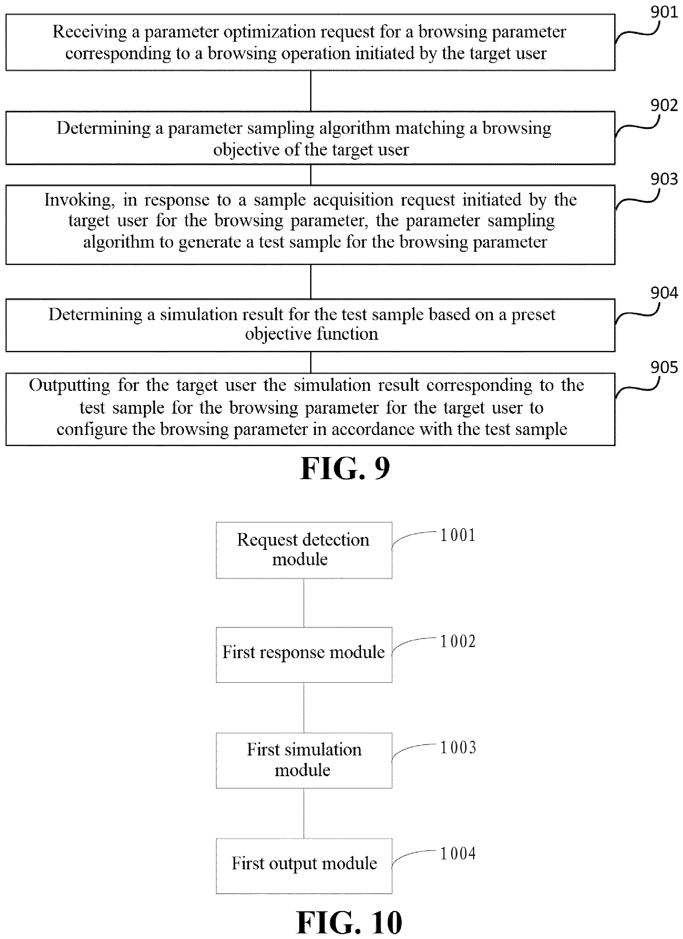

For ease of understanding, the technical solution of embodiments of the present application is described in detail by taking a resource processing scenario as an example. FIG. 9 illustrates a flow chart of an embodiment of an information processing method provided by embodiments of the present application. The method may include the following steps:
901: receiving a parameter optimization request for a browsing parameter corresponding to a browsing operation initiated by the target user;
902: determining a parameter sampling algorithm matching a browsing objective of the target user.
903: invoking, in response to a sample acquisition request initiated by the target user for the browsing parameter, the parameter sampling algorithm to generate a test sample for the browsing parameter.
904: determining a simulation result for the test sample based on a preset objective function.
905: outputting for the target user the simulation result corresponding to the test sample for the browsing parameter for the target user to configure the browsing parameter in accordance with the test sample.

In the field of e-commerce, the parameter optimization problem is also involved. Take the common product recommendation as an example, due to different browsing characteristics of users, such as the consumption habits, fields of concern, and historical browsing behaviors, the content or products recommended for users are also different. In practical application, in order to improve the user's click-through rate, the user's browsing characteristics such as consumption habits and fields of concern can be parameterized to generate different browsing parameters, and through the setting of the plurality of browsing parameters, accurate analysis of the characteristics of the user's click-through objective can be achieved, so as to find the target products with a higher degree of user attention. The solution for performing parameter sampling of a plurality of browsing parameters and conducting parameter trials to determine the click-through rate of the user can be applied to the technical solution of embodiments of the present application to improve the efficiency of trials.

FIG. 10 illustrates a schematic structural diagram of an embodiment of an information processing apparatus provided by embodiments of the present application. The apparatus may include:
A request detection module 1001: for detecting a parameter optimization request initiated by a target user and determining a parameter sampling algorithm matching the target user.

A first response module 1002: for invoking, in response to a sample acquisition request initiated by the target user, the parameter sampling algorithm to generate a test sample.

A first simulation module 1003: for determining a simulation result for the test sample based on a preset objective function.

A first output module 1004: for outputting the simulation result for the test sample for the target user.

As an embodiment, the first simulation module may include:
a first sending unit for sending the test sample to a user end of the target user for the user end to input the test sample to the preset objective function so as to calculate and obtain the simulation result corresponding to the test sample; and
a first receiving unit for receiving the simulation result corresponding to the test sample sent by the user end.

As a further embodiment, the first simulation module may include:
a first calculation unit for inputting the test sample to the preset objective function so as to calculate and obtain the simulation result for the test sample.

In some embodiments, the apparatus may further include:
a node determination unit for determining a target node for starting the parameter sampling algorithm; and
the first response module may include:
   a first response unit for sending, in response to the sample acquisition request, the sample acquisition request to the target node starting the parameter sampling algorithm; and
   a sample acquisition unit for acquiring, through the target node, the test sample generated by the parameter sampling algorithm.

In a possible design, the first calculation unit may include:
a module establishing unit for establishing a simulation module for the objective function; and
a module calculation unit for inputting the test sample to the simulation module so as to calculate and obtain the simulation result for the test sample.

As a further embodiment, the apparatus may further include:
an identifier receiving module for receiving a simulation trial identifier sent by the target user; and
an identifier marking module for storing the simulation result for the test sample for the target user based on the simulation trial identifier.

In some embodiments, the request detection module may include:
a request receiving unit for receiving the parameter optimization request sent by the target user, wherein the parameter optimization request includes request service information for the parameter sampling algorithm; and
a first storage unit for determining, upon detecting the presence of a storage operation for the request service information in the data storage component, the parameter sampling algorithm for the target user to request service in the request service information.

As a possible implementation, the apparatus may further include:
a first verification unit for verifying the parameter optimization request of the target user based on the verification information in the request service information to obtain a verification result; and
a second storage unit for storing the request service information to the data storage component if the verification result is a successful verification.

In some embodiments, the first storage unit may be used specifically for:
acquiring, via a resource controller, a storage notification message initiated by the data storage component when storing the request service information; and
determining, based on the storage notification message, the parameter sampling algorithm for the target user to request service in the request service information.

As an embodiment, the apparatus may further include:
a convergence judgment module for acquiring a judgment result as to whether the test sample satisfies a preset convergence condition;
a first processing module for determining a target sample based on the test sample if the judgment result is that the test sample satisfies the convergence condition; and
a second processing module for jumping to the first response module to continue execution if the judgment result is that the test sample does not satisfy the convergence condition.

In one possible design, the first response module may include:
a second response unit for invoking, in response to the sample acquisition request initiated by the target user, the parameter sampling algorithm to generate a plurality of test samples in a batch processing manner.

The first simulation module may include:
a first simulation unit for determining simulation results separately corresponding to the plurality of test samples based on the preset objective function.

The first output module may include:
a first output unit for outputting the simulation results separately corresponding to the plurality of test samples for the target user.

In yet another possible design, the first simulation module may include:
a simulation establishing unit for establishing a plurality of simulation modules for the objective function;
a simulation matching module for matching target simulation modules separately for the plurality of test samples from the plurality of simulation modules; and
a second simulation module for inputting any test sample to the target simulation module corresponding to that test sample so as to calculate and obtain a simulation result for the test sample so as to obtain the simulation results separately corresponding to the plurality of test samples.

Further, optionally, the first simulation unit may specifically be used for:
sending the plurality of test samples to the user end of the target user for the user end to input the plurality of test samples separately to the preset objective function so as to calculate and obtain the simulation results separately corresponding to the plurality of test samples; and receiving the simulation results separately corresponding to the plurality of test samples that are sent by the user end.

As an embodiment, the request detection module may include:
a second receiving unit for receiving a parameter optimization request initiated by a target user for a parameter to be processed of a target resource; and
a first determination unit for determining a parameter sampling algorithm matching a processing objective of the target resource;
the first response module may include:
   a request response unit one for invoking, in response to a sample acquisition request initiated by the target user for the parameter to be processed, the parameter sampling algorithm to generate a test sample for the parameter to be processed; and
   the first output module may include:
      a second output unit for outputting for the target user a simulation result corresponding to the test sample for the parameter to be processed for the target user to process the target resource in accordance with the test sample.

As another embodiment, the request detection module may include:
a third receiving unit for receiving a parameter optimization request for a browsing parameter generated for a browsing operation initiated by the target user; and
a second determination unit for determining a parameter sampling algorithm matching a browsing objective of the target user;
the first response module may include:
   a request response unit two for invoking, in response to a sample acquisition request initiated by the target user for the browsing parameter, the parameter sampling algorithm to generate a test sample for the browsing parameter; and
   the first output module may include:
      a third output unit for outputting for the target user the simulation result corresponding to the test sample for the browsing parameter for the target user to configure the browsing parameter in accordance with the test sample.

In some embodiments, the objective function is a black box algorithm; and the request detection module may specifically be used for:
detecting a black box optimization request initiated by the target user, and determining the parameter sampling algorithm matching the target user.

The information processing apparatus of FIG. 10 can perform the information processing method of the embodiment illustrated in FIG. 1, the implementation principles and technical effects of which will not repeated. The specific manners in which the processing components in the above embodiments perform the various steps have been described in detail in the embodiments concerning the method and will not be illustrated in detail here.

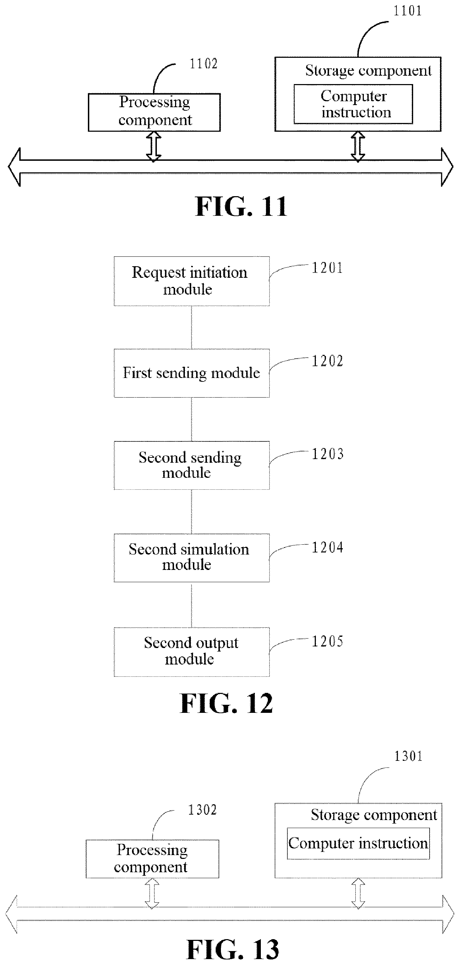

In a practical application, the information processing apparatus illustrated in FIG. 10 may be configured as a server. Referring to FIG. 11, which is a schematic structural diagram of an embodiment of a server provided by embodiments of the present application, the server may include: a storage component 1101 and a processing component 1102, wherein the storage component is used for storing one or more computer instructions, the one or more computer instructions being invoked by the processing component; and
the processing component 1102 may be used for:
detecting a parameter optimization request initiated by a target user and determining a parameter sampling algorithm matching the target user; invoking, in response to a sample acquisition request initiated by the target user, the parameter sampling algorithm to generate a test sample; determining a simulation result for the test sample based on a preset objective function; and outputting the simulation result for the test sample for the target user.

In addition, the processing component may also perform the information processing method illustrated in any of the preceding embodiments, which will not be repeated herein for the sake of brevity of description. The server in embodiments of the present application may be the service end of the preceding embodiments, and may perform interaction of data or information with the user device corresponding to the user end.

Here, the processing component 1102 may include one or more processors to execute the computer instructions so as to complete all or some of the steps in the methods described above. Of course, the processing component may also be one or more application-specific integrated circuits (ASICs), digital signal processors (DSPs), digital signal processing devices (DSPDs), programmable logic devices (PLDs), field-programmable gate arrays (FPGAs), controllers, microcontrollers, micro-processors, or other electronic component implementations to perform the information processing methods described above.

The storage component 901 is configured to store various types of data to support operations at the terminal. The storage component may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or optical disk.

Of course, the computing device can necessarily include other components, such as input/output interfaces, communication components, and the like. The input/output interfaces provide interfaces between the processing component and peripheral interface modules, which may be output devices, input devices, and the like. The communication component is configured to facilitate communication between the computing device and other devices by wired or wireless means, and the like.

In addition, embodiments of the present application provide a computer-readable storage medium, wherein the storage medium may store one or more computer instructions, the one or more computer instructions, when executed, being used to implement any of the information processing methods in FIGS. 1 to 5 in embodiments of the present application.

FIG. 12 illustrates a schematic structural diagram of an embodiment of an information processing apparatus provided by embodiments of the present application. The apparatus may include:
A request initiation module 1201: for detecting a parameter optimization request initiated by a target user for a parameter sampling algorithm.

A first sending module 1202: for sending the parameter optimization request provided by the target user to a service end for the service end to determine a parameter sampling algorithm matching the target user; and
a second sending module 1203: for sending a sample acquisition request initiated by the target user to the service end for the service end to invoke, in response to the sample acquisition request, the parameter sampling algorithm to generate a test sample.

A second simulation module 1204: for determining a simulation result for the test sample based on a preset objective function.

A second output module 1205: for outputting the simulation result for the test sample for the target user.

As an embodiment, the second simulation module may include:
a sample receiving unit for receiving the test sample sent by the service end; and
a sample simulation unit for inputting the test sample to the objective function so as to calculate and obtain a calculation result corresponding to the test sample.

In some embodiments, the sample receiving unit may specifically be used for: receiving a plurality of test samples sent by the service end, wherein the plurality of test samples are generated by the service end by invoking the parameter sampling algorithm in a batch processing manner.

The sample simulation unit may specifically be used for: inputting the plurality of test samples separately to the objective function so as to calculate and obtain calculation results separately corresponding to the plurality of test samples.

As another embodiment, the second simulation module may include:
a result receiving unit for receiving the simulation result corresponding to the test sample sent by the service end, wherein the simulation result is calculated and obtained by inputting the test sample to the preset objective function by the service end.

In some embodiments, the apparatus may further include:
a convergence judgment module for acquiring a judgment result as to whether the test sample satisfies a preset convergence condition;
a first processing module for determining a target sample based on the test sample if the judgment result is that the test sample satisfies the convergence condition; and
a second processing module for jumping to the second sending module to continue execution if the judgment result is that the test sample does not satisfy the convergence condition.

The information processing apparatus of FIG. 12 can perform the information processing method of the embodiment illustrated in FIG. 7, the implementation principles and technical effects of which will not repeated. The specific manners in which the processing components in the above embodiments perform the various steps have been described in detail in the embodiments concerning the method and will not be illustrated in detail here.

In a practical application, the information processing apparatus illustrated in FIG. 12 may be configured as a user device. Referring to FIG. 13, which is a schematic structural diagram of an embodiment of a user device provided by embodiments of the present application, the server may include: a storage component 1301 and a processing component 1302, wherein the storage component 1301 is used for storing one or more computer instructions, the one or more computer instructions being invoked by the processing component 1302.

The processing component 1302 may be used for:
detecting a parameter optimization request initiated by a target user for a parameter sampling algorithm; sending the parameter optimization request to a service end for the service end to determine a parameter sampling algorithm matching the target user; sending a sample acquisition request initiated by the target user to the service end for the service end to invoke, in response to the sample acquisition request, the parameter sampling algorithm to generate a test sample; determining a simulation result for the test sample based on a preset objective function; and outputting the simulation result for the test sample for the target user.

The user device illustrated in embodiments of the present application can be specifically used as the user end in the preceding embodiments, and as to the specific processing methods and beneficial effects of each step in embodiments of the present application, reference can be made to the relevant description of the user end in the preceding embodiments, which will not be repeated here.

In addition, the processing component may also perform the information processing method illustrated in any of the preceding embodiments, which will not be repeated herein for the sake of brevity of description.

Here, the processing component 1302 may include one or more processors to execute the computer instructions so as to complete all or some of the steps in the methods described above. Of course, the processing component may also be one or more application-specific integrated circuits (ASICs), digital signal processors (DSPs), digital signal processing devices (DSPDs), programmable logic devices (PLDs), field-programmable gate arrays (FPGAs), controllers, microcontrollers, micro-processors, or other electronic component implementations to perform the information processing methods described above.

The storage component 1301 is configured to store various types of data to support operations at the terminal. The storage component may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or optical disk.

Of course, the computing device can necessarily include other components, such as input/output interfaces, communication components, and the like. The input/output interfaces provide interfaces between the processing component and peripheral interface modules, which may be output devices, input devices, and the like. The communication component is configured to facilitate communication between the computing device and other devices by wired or wireless means, and the like.

In addition, embodiments of the present application provide a computer-readable storage medium, wherein the storage medium may store one or more computer instructions, the one or more computer instructions, when executed, being used to implement the information processing method illustrated in FIG. 6 in embodiments of the present application.

The apparatus embodiment described above is only schematic, where the units described as separate components may or may not be physically separated, and the components displayed as units may or may not be physical units, that is, may be located in one place, or may be distributed to a plurality of network units. Part or all of the modules may be selected according to actual needs to achieve the purpose of the solutions of the present embodiment. Those of ordinary skill in the art can understand and implement the solution of the present embodiment without creative effort.

From the description of the above implementations, those skilled in the art may clearly understand that the various implementations may be implemented by means of software plus a necessary general hardware platform, and definitely may also be implemented by a combination of hardware and software. Based on such understanding, the above technical solution essentially or the part contributing to the prior art may be embodied in the form of a computer product. the present application can be in the form of a computer program product implemented on one or more computer-usable storage media (including, but not limited to, a magnetic disk memory, a CD-ROM, an optical memory, and the like) including computer usable program code.

Finally, it should be noted that the above embodiments are only used to illustrate the technical solutions of the present application, and not to limit them; although the present application is described in detail with reference to the foregoing embodiments, it should be understood by those of ordinary skill in the art that it is still possible to modify the technical solutions recorded in the foregoing embodiments, or to replace some of the technical features with equivalent ones; and these modifications or replacements do not make the essence of the corresponding technical solutions out of the spirit and scope of the technical solutions of the embodiments of the present application.

## Claims

1. An information processing method, comprising:
detecting a parameter optimization request initiated by a target user and determining a parameter sampling algorithm matching the target user;
invoking, in response to a sample acquisition request initiated by the target user, the parameter sampling algorithm to generate a test sample;
determining a simulation result for the test sample based on a preset objective function; and
outputting the simulation result for the test sample for the target user.

2. The method according to claim 1, wherein said determining a simulation result for the test sample based on a preset objective function comprises:
sending the test sample to a user end of the target user for the user end to input the test sample to the preset objective function so as to calculate and obtain the simulation result corresponding to the test sample; and
receiving the simulation result corresponding to the test sample sent by the user end.

3. The method according to claim 1, wherein after said detecting a parameter optimization request initiated by a target user and determining a parameter sampling algorithm matching the target user, the method further comprises:
determining a target node for starting the parameter sampling algorithm; and
said invoking, in response to a sample acquisition request initiated by the target user, the parameter sampling algorithm to generate a test sample comprises:
sending, in response to the sample acquisition request, the sample acquisition request to the target node starting the parameter sampling algorithm; and
acquiring, through the target node, the test sample generated by the parameter sampling algorithm.

4. The method according to claim 1, wherein said determining a simulation result for the test sample based on a preset objective function comprises:
inputting the test sample to the preset objective function so as to calculate and obtain the simulation result for the test sample.

5. The method according to claim 4, wherein said inputting the test sample to the preset objective function so as to calculate and obtain the simulation result for the test sample comprises:
establishing a simulation module for the objective function; and
inputting the test sample to the simulation module so as to calculate and obtain the simulation result for the test sample.

6. The method according to claim 1, further comprising:
receiving a simulation trial identifier sent by the target user; and
storing the simulation result for the test sample for the target user based on the simulation trial identifier.

7. The method according to claim 1, wherein said detecting a parameter optimization request initiated by a target user and determining a parameter sampling algorithm matching the target user comprises:
receiving the parameter optimization request sent by the target user, wherein the parameter optimization request comprises request service information for the parameter sampling algorithm; and
determining, upon detecting the presence of a storage operation for the request service information in a data storage component, the parameter sampling algorithm for the target user to request service in the request service information.

8. The method according to claim 7, wherein the request service information further comprises verification information; and after said receiving the parameter optimization request sent by the target user, the method further comprises:
verifying the parameter optimization request of the target user based on the verification information in the request service information to obtain a verification result; and
storing the request service information to the data storage component if the verification result is a successful verification.

9. The method according to claim 7, wherein said determining, upon detecting the presence of a storage operation for the request service information in a data storage component, the parameter sampling algorithm for the target user to request service in the request service information comprises:
acquiring, via a resource controller, a storage notification message initiated by the data storage component when storing the request service information; and
determining, based on the storage notification message, the parameter sampling algorithm for the target user to request service in the request service information.

10. The method according to claim 1, wherein after said determining a simulation result for the test sample based on a preset objective function, the method further comprises:
acquiring a judgment result as to whether the test sample satisfies a preset convergence condition;
determining a target sample based on the test sample if the judgment result is that the test sample satisfies the convergence condition; and
returning, if the judgment result is that the test sample does not satisfy the convergence condition, to said invoking, in response to a sample acquisition request initiated by the target user, the parameter sampling algorithm to generate a test sample to continue execution.

11. The method according to claim 1, wherein the objective function is a black box algorithm; and said detecting a parameter optimization request initiated by a target user and determining a parameter sampling algorithm matching the target user comprises:
detecting a black box optimization request initiated by the target user, and determining the parameter sampling algorithm matching the target user.

12. An information processing method, comprising:
receiving a parameter optimization request initiated by a target user for a parameter to be processed of a target resource;
determining a parameter sampling algorithm matching a processing objective of the target resource;
invoking, in response to a sample acquisition request initiated by the target user for the parameter to be processed, the parameter sampling algorithm to generate a test sample for the parameter to be processed;
determining a simulation result for the test sample based on a preset objective function; and
outputting for the target user the simulation result corresponding to the test sample for the parameter to be processed for the target user to process the target resource in accordance with the test sample.

13. An information processing method, comprising:
receiving a parameter optimization request for a browsing parameter corresponding to a browsing operation initiated by a target user;
determining a parameter sampling algorithm matching a browsing objective of the target user;
invoking, in response to a sample acquisition request initiated by the target user for the browsing parameter, the parameter sampling algorithm to generate a test sample for the browsing parameter;
determining a simulation result for the test sample based on a preset objective function; and
outputting for the target user the simulation result corresponding to the test sample for the browsing parameter for the target user to configure the browsing parameter in accordance with the test sample.

14. An information processing method, comprising:
detecting a parameter optimization request initiated by a target user for a parameter sampling algorithm;
sending the parameter optimization request to a service end for the service end to determine a parameter sampling algorithm matching the target user;
sending a sample acquisition request initiated by the target user to the service end for the service end to invoke, in response to the sample acquisition request, the parameter sampling algorithm to generate a test sample;
determining a simulation result for the test sample based on a preset objective function; and
outputting the simulation result for the test sample for the target user.

15. The method according to claim 14, wherein said determining a simulation result for the test sample based on a preset objective function comprises:
receiving the test sample sent by the service end; and
inputting the test sample to the objective function so as to calculate and obtain a calculation result corresponding to the test sample.

16. The method according to claim 15, wherein said receiving the test sample sent by the service end comprises:
receiving a plurality of test samples sent by the service end, wherein the plurality of test samples are generated by the service end by invoking the parameter sampling algorithm in a batch processing manner; and
said determining a simulation result for the test sample based on a preset objective function comprises:
inputting the plurality of test samples separately to the objective function so as to calculate and obtain calculation results separately corresponding to the plurality of test samples.

17. The method according to claim 14, wherein after said determining a simulation result for the test sample based on a preset objective function, the method further comprises:
acquiring a judgment result as to whether the test sample satisfies a preset convergence condition;
determining a target sample based on the test sample if the judgment result is that the test sample satisfies the convergence condition; and
returning, if the judgment result is that the test sample does not satisfy the convergence condition, to said sending a sample acquisition request initiated by the target user to the service end for the service end to invoke, in response to the sample acquisition request, the parameter sampling algorithm to generate a test sample to continue execution.

18. An information processing method, comprising:
determining, in response to a request to invoke an information processing interface, a processing resource corresponding to the information processing interface; and
using the processing resource corresponding to the information processing interface to perform the steps of:
detecting a parameter optimization request initiated by a target user and determining a parameter sampling algorithm matching the target user;
invoking, in response to a sample acquisition request initiated by the target user, the parameter sampling algorithm to generate a test sample;
determining a simulation result for the test sample based on a preset objective function; and
outputting the simulation result for the test sample for the target user.

19. An information processing apparatus, comprising:
a request detection module for detecting a parameter optimization request initiated by a target user and determining a parameter sampling algorithm matching the target user;
a first response module for invoking, in response to a sample acquisition request initiated by the target user, the parameter sampling algorithm to generate a test sample;
a first simulation module for determining a simulation result for the test sample based on a preset objective function; and
a first output module for outputting the simulation result for the test sample for the target user.

20. An information processing apparatus, comprising:
a request initiation module for detecting a parameter optimization request initiated by a target user for a parameter sampling algorithm;
a first sending module for sending the parameter optimization request provided by the target user to a service end for the service end to determine a parameter sampling algorithm matching the target user;
a second sending module for sending a sample acquisition request initiated by the target user to the service end for the service end to invoke, in response to the sample acquisition request, the parameter sampling algorithm to generate a test sample;
a second simulation module for determining a simulation result for the test sample based on a preset objective function; and
a second output module for outputting the simulation result for the test sample for the target user.

21. A server, comprising: a storage component and a processing component, wherein the storage component is used for storing one or more computer instructions, the one or more computer instructions being invoked by the processing component; and
the processing component is used for:
detecting a parameter optimization request initiated by a target user and determining a parameter sampling algorithm matching the target user; invoking, in response to a sample acquisition request initiated by the target user, the parameter sampling algorithm to generate a test sample; determining a simulation result for the test sample based on a preset objective function; and outputting the simulation result for the test sample for the target user.

22. A user device, comprising: a storage component and a processing component, wherein the storage component is used for storing one or more computer instructions, the one or more computer instructions being invoked by the processing component; and
the processing component is used for:
detecting a parameter optimization request initiated by a target user for a parameter sampling algorithm; sending the parameter optimization request provided by the target user to a service end for the service end to determine a parameter sampling algorithm matching the target user; sending a sample acquisition request initiated by the target user to the service end for the service end to invoke, in response to the sample acquisition request, the parameter sampling algorithm to generate a test sample; determining a simulation result for the test sample based on a preset objective function; and outputting the simulation result for the test sample for the target user.
